# EUROPÄISCHE PATENTSCHRIFT

(11) **EP 1 591 322 B1**
(45) Veröffentlichungstag und Bekanntmachung des Hinweises auf die Patenterteilung: **14.04.2010**
(21) Anmeldenummer: 04101776.5
(22) Anmeldetag: 28.04.2004
(51) Int. Cl.: B60R 21/13, B60J 7/08, B60J 7/22

(54) **Personenkraftwagen mit einem zurückklappbaren Verdeck**
Vehicle with a convertible top
Véhicule avec un toit escamotable

(43) Veröffentlichungstag der Anmeldung: 02.11.2005
(73) Patentinhaber: Ford Global Technologies, LLC, Dearborn, MI 48126 (US)
(72) Erfinder: Benderoth, Thomas, 51647 Gummersbach (DE); Wendelmuth, Harald, 56112 Lahnstein (DE); Pimentel, Nelson, 41462 Neuss (DE)
(74) Vertreter: Dörfler, Thomas

(56) Entgegenhaltungen:
- EP-A- 1 084 914
- WO-A-97/45284
- DE-A- 4 116 223
- DE-C- 4 438 190
- FR-A- 2 722 151
- US-A- 5 584 522
- US-B1- 6 443 517

## Beschreibung

Die Erfindung betrifft einen mit einem zurückklappbaren Verdeck versehenen Personenkraftwagen, insbesondere ein Cabriolet oder ein Roadster.

Bei der Fahrt in einem Personenkraftwagen mit geöffneten Verdeck beispielsweise in einem Cabriolet oder Roadster treten bei zunehmender Geschwindigkeit, insbesondere oberhalb von 80 km/h von der Windschutzscheibe ausgehende und den Fahrgastraum durchsetzende Windwirbel oder Turbulenzen auf, die als besonders unangenehm empfunden werden.

Zur Vermeidung dieser Wirbel ist es bekannt Windschutzvorrichtungen vorzusehen. Zwei Arten von unterschiedlich wirkenden Windschutzvorrichtungen sind bekannt: Windschotts und Deflektoren.

Die Windschotts umfassen einen Windschutzteil, der in Wirkstellung sich nach oben erstreckt und in der Regel hinter der ersten Sitzreihe angeordnet ist. Bei einer ersten Bauart besteht der Windschutzteil aus einem feinmaschigen Gitter oder Netz, das an einem eigenen Rahmen oder an Karosserieteilen aufgespannt ist. Auch die Verwendung von Glas- oder Kunststoffplatten für den Windschutzteil ist bekannt. Meist umfassen die für 4-sitzige Cabriolets vorgesehenen Windschotts ein waagerechtes Bauteil, das die hintere Sitzreihe abdeckt. Die Windschotts reduzieren den von hinten nach vorne gerichteten Luftstrom der Wirbel bzw. leiten ihn nach oben ab und schützen so die Personen in den vor dem Windschott befindlichen Sitzen.

Aus der DE 43 32 938 C1 ist ein Windschott bekannt, das selbsttätig beim Öffnen des Verdecks in seine etwa senkrechte Wirkstellung verlagert wird. Diese Konstruktion benötigt allerdings im Bereich des Kofferraums bzw. in diesem und im Bereich zwischen den Türen und der hinteren Radhäuser einen erheblichen Platzbedarf, wodurch das Kofferraumvolumen stark verringert ist und eine besondere Konstruktion im Bereich zwischen den Türen und den hinteren Radhäuser nötig wird.

Aus der DE 198 41 788 A1 ist es bekannt, ein Windschott an der Rückseite der Vordersitze selbst zu befestigen. Das Windschott ist dabei zwischen einer unteren Position und der oberen Wirkstellung verlagerbar.

Ferner ist aus der DE 198 26 672 A1 ein Windschutz bekannt, der an einem ausfahrbaren Überrollbügel befestigt ist, der zwischen einer abgesenkten Ruhelage, einer Zwischenstellung, in der der Windschutz aktiviert ist, und einer voll ausgefahrenen Stellung verlagerbar ist.

Nachteilig ist bei diesen Windschotts, daß sie nur eine Verringerung der störenden Windturbulenzen in der vorderen Sitzreihe bewirken. Zudem erschweren oder verhindern sie konstruktionsbedingt die Benutzung der Rücksitze.

Deflektoren, auch Windabweiser genannt, wie sie beispielsweise aus der DE 197 34 249 A1, DE 199 30 049 C2 oder US 6,416,120 B1 hervorgehen, versuchen ihre Wirkung durch ein im Bereich der Windschutzscheibe angeordnetes Luftstromleitelement zu erzielen, das den von der Windschutzscheibe kommenden Luftstrom über den Fahrgastraum ablenken und hinwegleiten soll. Nachteilig ist bei derartigen Windabweisern, daß aufwendige Konstruktionen der Windschutzscheibenhalterung bzw. Rahmen nötig sind, um die Windabweiser zu integrieren oder anzubringen. Zudem wird durch die aus konstruktiven und ästhetischen Gründen relativ kleinen Windabweiser keine ausreichende Verringerung der Windwirbelbelastung der Rücksitze erreicht. Ferner wird durch diese Art der Windschutzvorrichtungen der Luftwiderstand der offenen Fahrzeuge erhöht, was den Kraftstoffverbrauch negativ erhöht.

Die oben genannten Konstruktionen benötigen zusätzlich zum Raumbedarf zur Aufnahme der Dachkonstruktion auch entsprechend Platz für die Konstruktionen und deren Mechanik im Kofferraum. Dies bedingt jedoch ein sehr kleines Kofferraumvolumen, insbesondere in Verbindung mit den heute üblichen festen Faltdächern aus Kunststoff oder Metall.

Zusätzlich erfordern die modernen Sicherheitsrichtlinien einen Überrollschutz für die Insassen. Dieser kann durch einen Bügel im Bereich der B-Säulen ausgebildet werden, was jedoch insbesondere aus optischen Gründen unerwünscht ist. Daher wird zunehmend sogar auf feste B-Säulen ganz verzichtet und diese Elemente häufig als im Gefahrenfall automatisch ausfahrend ausgebildet. Dies bringt allerdings einen gewissen Aufwand bei der Konstruktion mit sich. Auch der Platzbedarf derartiger Konstruktionen in den Seiten der Karosserie muss berücksichtigt werden und verringert den im Fahrgastraum zur Verfügung stehenden Raum.

Aus der DE 44 38 190 C1 ist ein Dachaufbau für Fahrzeuge mit versenkbarem Klappdach bekannt, bei der sich hinter dem geschlossenen Klappdach ein Querbügel befindet. Dieser Querbügel dient bei geöffnetem Klappdach im Wesentlichen als Überrollbügel. Nachteilig ist jedoch, dass der Querbügel bei geschlossenem Klappdach die optische Erscheinung des Fahrzeuges beeinträchtigt.

Bei geschlossenen Personenkraftwagen wird die Karosserie als Ganzes durch die Verbindung des Bodens über die A-, B- und C-Säulen mit dem Dach ausgesteift. Dies ist bei Personenkraftwagen mit einem zurückklappbaren Verdeck, wie Cabriolets oder Roadster naturgemäß nicht möglich, da weder Dach noch B- oder C-Säulen vorhanden sind. Daher müssen bei diesen offenen Personenkraftwagen der Boden und die anderen Karosserieteile durch zusätzliche Versteifungen verstärkt werden, um eine ausreichende Verwindungssteife zu erreichen. Dies bedingt allerdings zusätzliches Gewicht und reduziert den nutzbaren Innenraum des Fahrzeuges.

Weiterhin ist bei den Personenkraftwagen mit einem zurückklappbaren Verdeck die Unterbringung des zurückgeklappten Verdecks ein Problem, wobei dies noch erhöht wird, wenn das Verdeck als faltbares Dach aus mehreren festen Dachsegmenten besteht. Durch die Größe und die Breite der C-Säule, welche im zumindest oberhalb der Gürtelline auch zum Verdeck zählt, müssen spezielle Umbauten im Kofferraum, z.B. der Federbeindome, gegenüber einem geschlossenen Personenkraftwagen durchgeführt werden. Erst dann kann im Kofferraum das zurückgeklappte Verdeck aufgenommen werden. Weiterhin beansprucht das zurückgeklappte Verdeck relativ viel Stauraum im Kofferraum.

Der Erfindung liegt daher die Aufgabe zu Grunde, eine Personenkraftwagen mit einem zurückklappbaren Verdeck zu schaffen, bei dem die Belastung der Insassen durch Windturbulenzen bei geöffnetem Verdeck nicht nur in der vorderen Sitzreihe, sondern auch auf den Rücksitzen verringert und die Benutzbarkeit der Rücksitze nicht oder möglichst wenig einschränkt ist. Zudem soll die Windabweisvorrichtung konstruktiv einfach sein und den Luftwiderstand des Personenkraftwagens nicht oder nur wenig erhöhen. Ferner soll der Personenkraftwagen einen sicheren und trotzdem ansprechenden Überrollschutz einfacher Konstruktion aufweisen. Zusätzlich soll der Personenkraftwagen eine hohe Verwindungssteife aufweisen. Nicht zuletzt soll das Kofferraumvolumen des Personenkraftwagens bei geöffnetem und verstautem Verdeck möglichst groß sein.

Diese Aufgabe wird durch den in Anspruch 1 wiedergegebenen Personenkraftwagen mit einem zurückklappbaren Verdeck gelöst.

Durch die erfindungsgemäße Ausgestaltung des Personenkraftwagens (PKW) ist die Belastung der Insassen durch Windturbulenzen bei geöffnetem Verdeck nicht nur in der vorderen Sitzreihe, sondern auch auf den Rücksitzen verringert und die Benutzbarkeit der Rücksitze nicht einschränkt. Zudem ist die erfindungsgemäße Lösung konstruktiv einfach ausgestaltet.

Unter C-Säulenstumpf wird vorliegend eine über die Gürtellinie des mit einem zurückklappbaren Verdeck versehenen PKW nach oben herausragende C-Säule verstanden, die jedoch nur eine kleine Längserstreckung aufweist und nicht die Aus-maße einer sonst bei geschlossenen PKW üblicherweise vorhandenen C-Säule aufweist.

Die Erfindung geht einen entgegen der üblichen Konstruktion von Cabriolets und Roadster gerichteten Weg. Diese weisen nämlich keine C-Säulen auf. Bei der Erfindung wurde aber erkannt, dass C-Säulenstümpfe zusammen mit dem Kragen neben der obigen windabweisenden Funktion eine Reihe von Vorteilen besitzen.

So können C-Säulenstümpfe zusammen mit dem Kragen bei entsprechender Auslegung gleichzeitig die Funktion eines Überschlagschutzes, wie z. B. Überrollbügels übernehmen. Dies wird ohne teuere und aufwendige, aktiv ausfahrende Mechani s-men erreicht, die zudem noch einen erhöhten Platzbedarf aufweisen.

Zusätzlich wird mit der erfindungsgemäßen Ausgestaltung des Personenkraftwagens eine größere Steife, insbesondere Verwindungssteife erzielt, da die C-Säulenstümpfe zusammen mit dem Kragen und der übrigen Karosserie quasi eine geschlossene kreisförmige Struktur ausbilden. Üblicherweise wären, um die gleiche Verwindungssteife zu erzielen, weitere versteifende Konstruktionselemente, wie z. B. eine zusätzliche Wand hinter der Rücksitzbank nötig.

Nicht zuletzt, wird durch die hochgezogenen C-Säulenstümpfe und den Kragen die Länge des Verdecks verkürzt. Die Dachteile sind also insgesamt kürzer, so dass diese bei geöffnetem Verdeck innerhalb des Kofferraums weniger Platz beanspruchen und so das Kofferraumvolumen weniger eingeschränkt wird. Zudem muss der sonst besonders sperrige C-Säulenbereich, der die Mechanik des Verdecks umfasst, nicht wie sonst üblich innerhalb der Karosserie versenkt werden, sondern kann in den C-Säulenstümpfen untergebracht werden, so dass zusätzliches Kofferraumvolumen frei wird. Üblicherweise benötigt gerade dieser Bereich des Verdecks spezielle Konstruktionen im Bereich des Kofferraums und der Stoßdämpferaufnahmen der Radhäuser, da er besonders breit ist. Mit der erfindungsgemäßen Lösung wird es erstmalig möglich "normale" PKW Plattformen auch für Cabriolets und Roadster zu verwenden, da diese nunmehr im Bereich des Kofferraums und der Stoßdämpferaufnahmen bzw. der Radhäuser keine Speziallösungen benötigen.

Die obigen Vorteile werden besonders vorteilhaft erreicht, wenn die C-Säulenstümpfe über dem hinter dem Fahrgastraum angeordneten Kragen verbunden sind. Somit wird eine besonders hohe Stabilität und optisch ansprechende Gestaltung mit der Luftstromleitwirkung kombiniert.

Der Kragen ist in einer Ausführungsform der Erfindung in Fahrtrichtung gesehen von hinten nach vorne und nach oben mit zunehmender Neigung versehen und führt die Kontur der Karosserie fort, so dass die durch Windturbulenzen hervorgerufene Rückströmung nach oben abgeleitet werden und die Insassen nicht oder wen i-ger stark erreicht.

Die C-Säulenstümpfe und/oder der Kragen ragen also nach oben über die Gürtellinie hinaus. Vorzugsweise ragen die C-Säulenstümpfe und/oder der Kragen nach oben über die Gürtellinie etwa bis zur Schulterlinie des PKW, also etwa bis zur Höhe des Endes der Rückenstützflächen der Sitze. Die C-Säulenstümpfe und/oder der Kragen können aber auch nach oben über die Gürtellinie etwa bis zur Kopfhöhe ragen. Hierdurch wird ein besonders guter Schutz vor Windturbulenzen und zusätzlich eine hohe Schutzwirkung im Falle eines Überschlags erreicht.

Die C-Säulenstümpfe und/oder der Kragen können direkt von der Karosserie gebildet sein und als gemeinsames Karosserieelement ausgebildet werden, was u. a. die Montage und Verarbeitung erleichtert und gleichzeitig den Überrollschutz und die Steife verbessert.

In der Erfindung ist der Kragen als Luftstromleitelement derart ausgebildet, dass er die Insassen zumindest teilweise vor dem von der Oberkante des Windschutzscheibenrahmens abfließenden Luftstrom schützt.

Hierzu ist ein in den Kragen integrierter Spoiler vorgesehen.

Der Spoiler wird aus optischen und ästhetischen Gründen bevorzugt der Kontur des Kragens angepasst. In seiner Ruhestellung, also nicht ausgefahrenen Zustand, ist er günstigerweise in die Kontur des Kragens eingelassen. So steht er nicht aus der Karosserieoberfläche hervor und stört den Gesamteindruck des Fahrzeugs nicht, was insbesondere aus Käufersicht wichtig ist.

Um den Spoiler in seine Wirkstellung zu bewegen, sind , Mittel vorzusehen, mittels welcher der Spoiler nach Öffnung des Verdecks in seine Wirkstellung bewegt wird. Der Spoiler wird dazu durch die Mittel aus der Kontur des Kragens herausgeschwenkt, wobei die Schwenkachse an den C-Säulenstümpfen im Bereich des Übergangs zum Verdeck angeordnet sein kann.

Das Ausfahren bzw. die Aktivierung des Spoilers kann manuell oder automatisch erfolgen. Bei manueller Aktivierung kann z. B. ein Schalter betätigt werden. Dies kann im Stand und/oder bis zu einer gewissen Fahrgeschwindigkeit erlaubt sein, bis zu der eine gefahrlose Betätigung möglich ist. Bei automatischer Aktivierung kann der Spoiler bei einer bestimmten, ggf. einstellbaren Geschwindigkeit ausgefahren werden, ab der z. B. zusätzlich seine Andruckwirkung nötig wird. Auch eine Kombination der manuellen und automatischen Aktivierung ist denkbar.

Der Spoiler wird vorzugsweise seitlich von jeweils mindestens einem Träger gehalten, die insbesondere seitlich im Bereich der C-Säulenstümpfe ansetzen und zur Befestigung am Personenkraftwagen dienen.

Es ist weiterhin möglich, den Spoiler beim Öffnen des Verdecks automatisch zu aktivieren bzw. auszufahren. Hierzu können die Träger mechanisch, elektromechanisch, pneumatisch, hydraulisch usw. betätigt werden.

Der Spoiler ist dann vorzugsweise bei geöffnetem Verdeck in seiner Wirkstellung im Bereich zwischen den C-Säulenstümpfen hinter dem Fahrgastraum derart angeordnet, dass er den von der Oberkante des Windschutzscheibenrahmens abfließenden Luftstrom aufnimmt und zumindest teilweise über die Insassen hinwegleitet. In seiner Wirkstellung ist der Spoiler dabei Vorteilhafterweise in Strömungsrichtung des Luftstroms und quer zu dieser im Wesentlichen waagerecht ausgerichtet.

Der Luftstrom fließt demnach über die Oberkante des Windschutzscheibenrahmens und über die erste Sitzreihe hinweg. Dort würde der Luftstrom üblicherweise in den Bereich der hinteren Sitzreihe eindringen und Wirbel verursachen. Durch die erfi n-dungsgemäße Ausgestaltung von Kragen und zusätzlichem Einsatz des Spoilers wird der Luftstrom aber über die hintere Sitzreihe hinweg "gehoben" bzw. gelenkt und rückströmende Wirbel abgeleitet.

Die genaue Wirkstellung des Spoilers wird auf die äußere Kontur des jeweiligen Fahrzeugs abgestimmt, sie liegt jedoch immer im Bereich hinter der letzten Sitzreihe am Kragen. Dort behindert er die Passagiere auf den hinteren Sitzreihen nicht und erzielt zusammen mit dem Kragen seine optimale Wirkung.

Vorteilhafterweise ist dabei der Spoiler als ein strömungsgünstig geformter, sich quer zur Längsrichtung des Personenkraftwagens erstreckender Flügel mit einer Wirkfläche ausgebildet. Diese erstreckt sich zweckmäßiger Weise zwischen den C-Säulenstümpfen bzw. im Bereich des Kragens.

Der Spoiler kann in Strömungsrichtung des Luftstroms und quer zu dieser im wesentlichen waagerecht ausgerichtet sein. Unter "im wesentlichen waagerecht" soll eine Ausrichtung verstanden werden, bei der der Spoiler in Strömungsrichtung und quer dazu gesehen um nicht mehr als 20° von der Waagerechten abweichend ausgerichtet ist. Bevorzugt ist eine Abweichung von weniger als 15°, noch bevorzugter weniger als 10° und höchst bevorzugt weniger als 5°. Auch andere Ausgestaltungen des Spoilers sind denkbar, wie z. B. eine gekrümmte, gezackte oder gewellte Form, um evtl. auftretende, regelmäßige Wirbelablösungen zu vermeiden, welche sich u. U. aufgrund der Geräuschbildung komfortmindernd auswirken.

Damit der Luftwiderstand nicht oder nur geringfügig erhöht und die Luftleitwirkung optimiert wird, kann der Spoiler ein aerodynamisches Profil aufweisen. Hierbei handelt es sich vorzugsweise um ein tragflächenartiges Profil. Bei entsprechender Gestaltung des Profils kann die Luftleitwirkung noch durch eine Sogkomponente verbessert werden. Aus aerodynamischen Gründen ist jedoch ein asymmetrisches Profil bevorzugt, da hierdurch die Luftleitwirkung weiter optimiert wird. Das Profil kann aber auch in Fahrtrichtung gesehen symmetrisch ausgebildet sein.

Ferner kann eine zusätzliche Windschutzvorrichtung der eingangs genannten Art vorgesehen sein. Dies ermöglicht eine weitere Optimierung der Luftleitwirkung bzw. Verringerung oder Verhinderung der Windwirbel im gesamten Fahrgastraum. Hierbei kann ein zusätzliches Windschott hinter der zweiten Sitzreihe, ein Deflektor an dem Windschutzscheibenrahmen oder eine Kombination dieser Windschutzvorrichtungen vorgesehen sein. Das Windschott ist dann insbesondere aus durchsichtigem Material hergestellt, um die Sicht nach hinten nicht zu beeinträchtigen. Vorzugsweise wird das Windschott nämlich im Bereich des Kragens angeordnet sein.

Bilden die C-Säulenstümpfe ggf. zusammen mit dem Kragen einen Überrollbügel aus, so kann es von Vorteil sein, wenn der Spoiler bei geeigneter struktureller Auslegung ebenfalls einbezogen und dann ggf. automatisch ausgelöst bzw. ausgefahren wird, sollte er nicht bereits aktiviert sein.

Aus der nachfolgenden Beschreibung ergeben sich weitere Merkmale, Einzelheiten und Vorteile der vorliegenden Erfindung. Es zeigen:
- Fig. 1: eine seitliche Ansicht einer schematischen Abbildung eines erfindungsgemäßen 4-sitzigen Cabriolets mit geschlossenem Verdeck;
- Fig. 2: eine seitliche Ansicht des Cabriolets aus Fig. 1 mit geöffnetem Verdeck;
- Fig. 3: eine perspektivische Ansicht des Cabriolets aus Fig. 1;
- Fig. 4: eine seitliche Ansicht einer weiteren Ausführungsform des erfindungsgemäßen 4-sitzigen Cabriolets mit Spoiler;
- Fig. 5: eine seitliche Ansicht des Cabriolets aus Fig. 4 mit ausgefahrenem Spoiler und
- Fig. 6: eine perspektivische Ansicht des Cabriolets aus Fig. 4 und 5 mit ausgefahrenem Spoiler.

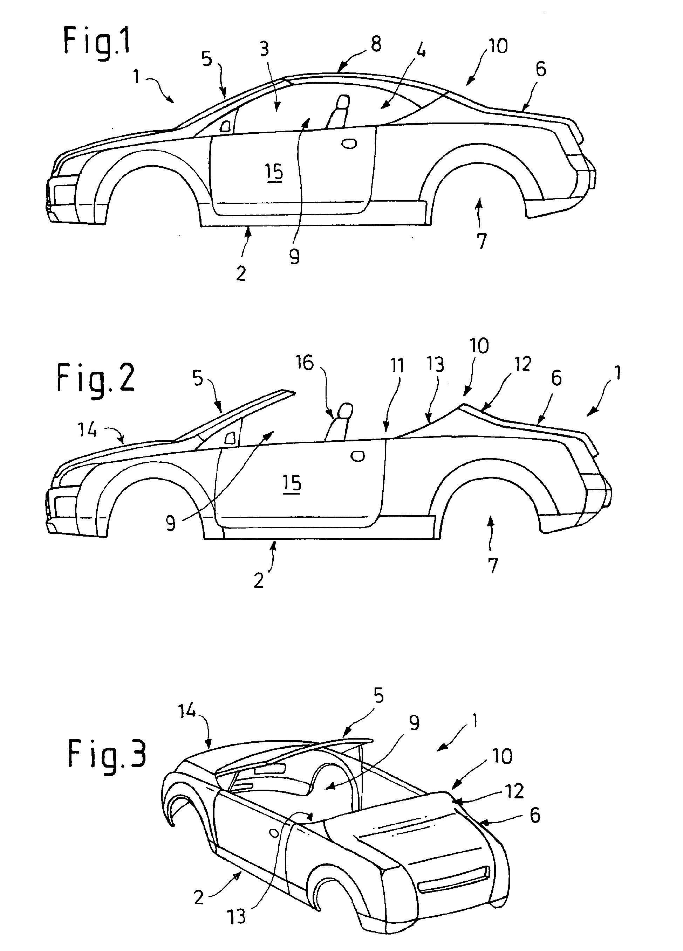

In der Figur 1 ist ein Cabriolet 1 mit geschlossenem Verdeck 8 dargestellt, das mit einem Karosserieelement 10 versehen ist, das erfindungsgemäß einen Kragen 12 und zwei C-Säulenstümpfe 13 aufweist. In der Figur 2 ist das Cabriolet 1 dagegen mit geöffnetem Verdeck 8 und in Fig. 3 in einer perspektivischer Ansicht von schräg oben und hinten abgebildet.

Das Cabriolet 1 umfasst eine Karosserie 2, die eine Windschutzscheibe 5 trägt, hinter welcher der Fahrgastraum 9 angeordnet ist, der seinerseits in einem unteren, bis zur Gürtellinie 11 der Karosserie 2 reichenden Bereich von der Karosserie 2 umschlossen ist. Der Fahrgastraum 9 umfasst eine vordere Sitzreihe 3 und eine hintere Sitzreihe 4. Hinter dem Fahrgastraum 9 befindet sich der Kofferraum 6 und an dessen Seiten die Radhäuser 7. Der Fahrgastraum 9 ist von einem zurückklappbaren Verdeck 8 überspannt.

Der Kragen 12 ist hinter dem Fahrgastraum 9 auf dem Kofferraum 6 und im Bereich zwischen den Türen 15 und den hinteren Radhäusern 7 angeordnet. In Fahrtrichtung gesehen ist der Kargen 12 von hinten nach vorne und nach oben mit zunehmender Neigung versehen und führt die Kontur der Karosserie 2 fort.

Seitlich zwischen den Türen 15 und den hinteren Radhäusern 7 ragen über die Gürtellinie 11 die C-Säulenstümpfe 13 nach oben und gehen nahtlos in den Kragen 12 über. Die C-Säulenstümpfe 13 sind dabei in Fahrtrichtung gesehen von vorne nach hinten und nach oben mit zunehmender Neigung versehen.

Sowohl die C-Säulenstümpfe 13 als auch der Kragen 12 ragen etwa bis knapp oberhalb der Schulterlinie der vorderen Sitze 16.

Die C-Säulenstümpfe 13 und der Kragen 12 bilden von oben gesehen eine etwa Bananen-förmige Gestalt aus, die den Bereich der hinteren Sitze 4 oberhalb der Gürtellinie 11 umgibt.

Die C-Säulenstümpfe 13 und der Kragen 12 werden von dem gemeinsamen Karosserieelement 10 gebildet. Dieses Element ist strukturell derart ausgebildet, dass auf zusätzlich versteifende Maßnahmen im hinteren Bereich des Cabriolets 1 verzichtet werden kann. Zudem ist seine Konstruktion so ausgelegt, dass es im Falle eines Überschlags die Funktion eines Überrollbügels ausübt und so die Insassen weitestgehend vor Verletzungen schützt. Auch der weiter unten beschriebene Spoiler 17 kann bei der Ausübung der Funktion eines Überrollbügels hinzugezogen werden, so er strukturell entsprechend ausgelegt ist.

Das in der Figur 3, 4 und 5 dargestellte Cabriolet unterscheidet sich von dem der Figuren 1,2 und 3 lediglich durch den Einsatz eines zusätzlichen Spoilers 17, so dass dieselben Bezugszeichen Verwendung finden.

Der Spoiler 17 ist in den Kragen 12 integriert und der Kontur des Kragens 12 angepasst sowie in die Kontur des Kragens 12 eingelassen. Mit anderen Worten, der Spoiler 17 ist im angelegten bzw. nicht ausgefahrenen Zustand in einer entsprechend dimensionierten Vertiefung in die Oberfläche des Fahrzeugs im Bereich des Kragens 12 eingelassen und steht nicht nach oben oder seitlich aus der Fläche heraus.

Der Spoiler 17 umfasst die eigentliche Wirkfläche 20 und die daran seitlich anschließenden Träger 18. Die Wirkfläche 20 erstreckt sich hinter dem Fahrgastraum 9 zwischen den C-Säulenstümpfen 13. Die Träger 18 sind nach vorne abgewinkelt und ragen in den Bereich der C-Säulenstümpfe, wo die Träger 18 über eine Schwenkachse 19 in Bereich der C-Säulenstümpfe 13 angelenkt sind.

Bei geöffnetem Verdeck 8 wird der Spoiler 17 in seine Wirkstellung im Bereich zwischen den C-Säulenstümpfen 13 hinter dem Fahrgastraum 9 derart angeordnet, dass er den von der Oberkante des Windschutzscheibenrahmens 5 abfließenden Luftstrom L aufnimmt und zumindest teilweise über die Insassen hinwegleitet. Der Spoiler 17 bzw. dessen Wirkfläche 20 ist in seiner Wirkstellung in Strömungsrichtung des Luftstroms L und quer zu dieser im Wesentlichen waagerecht ausgerichtet.

Um ihn in seine Wirkstellung zu bewegen, sind Mittel vorgesehen, mittels welcher der Spoiler 17 nach Öffnung des Verdecks 8 automatisch in seine Wirkstellung bewegt wird. Diese können z. B. mechanisch mit der Verdeckmechanik gekoppelte Gestänge sein. Der Spoiler 17 wird also durch die Mittel aus der Kontur des Kragens 12 herausgeschwenkt. Die Schwenkachse 19 ist an den C-Säulenstümpfen 13 im Bereich des Übergangs zum Verdeck 8 angeordnet.

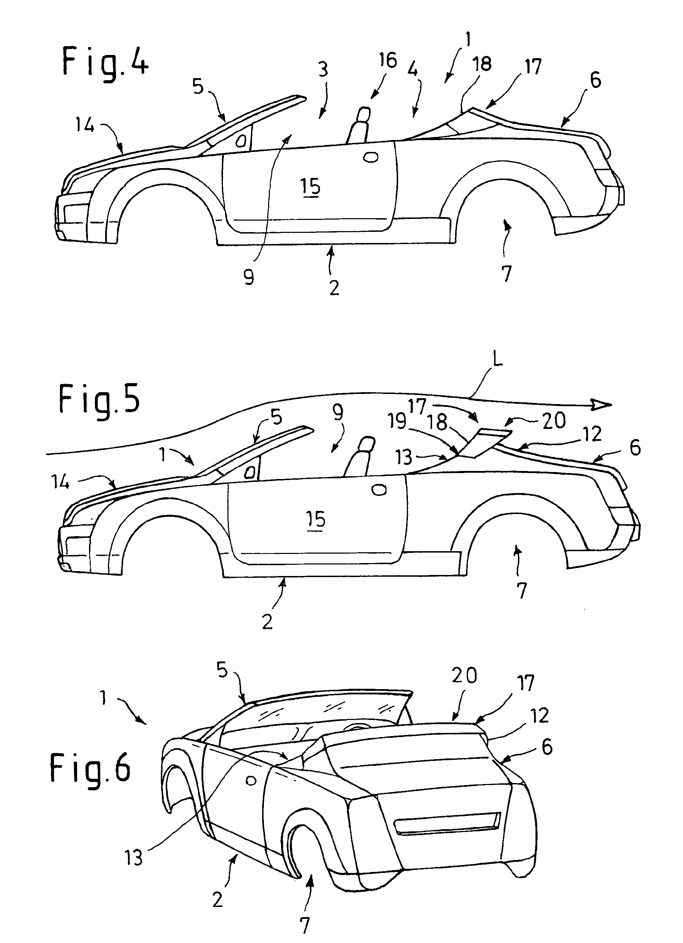

Wie durch Pfeil L in Fig. 5 angedeutet fließt der Luftstrom L bei fahrendem Fahrzeug zunächst an der Motorhaube 14 des Cabriolets entlang und wird durch die Windschutzscheibe 5 nach oben abgelenkt. Von der Kante der Windschutzscheibe 5 fließt der Luftstrom L weiter über den Kopfbereich der vorderen Sitzreihe 3 und hintere Sitzreihe 4 hinweg und trifft nun auf den etwa waagerecht stehenden Spoiler 17, der zusammen mit dem Kragen 12 als Luftstromleitelement wirkt und den Luftstrom L aufnimmt. Der Luftstrom wird dadurch über den Fahrgastraum 9 hinweggeleitet und eine Rückströmung aus von hinten nach vorn wirkende Wirbel verhindert. Üblicherweise würde der Luftstrom in den Bereich der hinteren Sitzreihe 4 eindringen und Wirbel verursachen.

Zusätzlich kann ein nicht dargestelltes Windschott im Bereich des Kragens 12 zur Optimierung des Luftstroms L vorgesehen sein. Vorteilhafterweise ist es aus durchsichtigem Material ausgebildet, um die Sicht nach hinten nicht zu behindern. Auch der Kragen 12 selbst und/oder der Spoiler 17 können im mittleren Bereich durchsichtige Elemente aufweisen, um eine gute Sicht nach hinten zu erlauben.

## Patentansprüche

1. Personenkraftwagen (1) mit einem zurückklappbaren Verdeck (8), insbesondere ein Cabriolet oder ein Roadster, der als feste C-Säulenstümpfe (13) ausgebildete C-Säulen und einen hinter dem Fahrgastraum (9) angeordneten Kragen (12) umfasst,
**dadurch gekennzeichnet, dass**
der Kragen (12) als Luftstromleitelement derart ausgebildet ist, dass es die Insassen zumindest teilweise vor dem von der Oberkante des Windschutzscheibenrahmens (5) abfließenden Luftstrom (L) schützt, wobei das Luftstromleitelement einen in den Kragen (12) integrierten Spoiler (17) umfasst und Mittel vorgesehen sind, mittels welcher der Spoiler (17) nach Öffnung des Verdecks (8) in seine Wirkstellung bewegt wird.

2. Personenkraftwagen nach Anspruch 1,
**dadurch gekennzeichnet, dass**
die C-Säulenstümpfe (13) über dem hinter dem Fahrgastraum (9) angeordneten Kragen (12) verbunden sind.

3. Personenkraftwagen nach Anspruch 1 oder 2,
**dadurch gekennzeichnet, dass**
der Kragen (12) in Fahrtrichtung gesehen von hinten nach vorne und nach oben mit zunehmender Neigung versehen ist und die Kontur der Karosserie (2) fortführt.

4. Personenkraftwagen nach Anspruch 1, 2 oder 3,
**dadurch gekennzeichnet, dass**
die C-Säulenstümpfe (13) und/oder der Kragen (12) nach oben über die Gürtellinie (11) hinausragen.

5. Personenkraftwagen nach einem der Ansprüche 1 bis 4,
**dadurch gekennzeichnet, dass**
die C-Säulenstümpfe (13) und/oder der Kragen (12) von der Karosserie (2) gebildet sind.

6. Personenkraftwagen nach einem der vorherigen Ansprüche,
**dadurch gekennzeichnet, dass**
die C-Säulenstümpfe (13) und der Kragen (12) als gemeinsames Karosserieelement (10) ausgebildet sind.

7. Personenkraftwagen nach einem der vorherigen Ansprüche,
**dadurch gekennzeichnet, dass**
der Spoiler (17) bei geöffnetem Verdeck (8) in seiner Wirkstellung im Bereich zwischen den C-Säulenstümpfen (13) hinter dem Fahrgastraum (9) derart angeordnet ist, dass er den von der Oberkante des Windschutzscheibenrahmens (5) abfließenden Luftstrom (L) aufnimmt und zumindest teilweise über die Insassen hinwegleitet.

8. Personenkraftwagen nach einem der vorherigen Ansprüche,
**dadurch gekennzeichnet, dass**
der Spoiler (17) der Kontur des Kragens (12) angepasst ist.

9. Personenkraftwagen nach einem der vorherigen Ansprüche,
**dadurch gekennzeichnet, dass**
der Spoiler (17) in die Kontur des Kragens (12) eingelassen ist.

10. Personenkraftwagen nach einem der vorherigen Ansprüche,
**dadurch gekennzeichnet, dass**
der Spoiler (17) in seiner Wirkstellung in Strömungsrichtung des Luftstroms (L) und quer zu dieser im Wesentlichen waagerecht ausgerichtet ist.

11. Personenkraftwagen nach einem der vorherigen Ansprüche,
**dadurch gekennzeichnet, dass**
der Spoiler (17) durch die Mittel aus der Kontur des Kragens (12) herausgeschwenkt wird.

12. Personenkraftwagen nach Anspruch 11,
**dadurch gekennzeichnet, dass**
das eine Schwenkachse (19) an den C-Säulenstümpfen (13) im Bereich des Übergangs zum Verdeck (8) angeordnet ist.

13. Personenkraftwagen nach einem der vorherigen Ansprüche,
**dadurch gekennzeichnet, dass**
er ein zusätzliches Windschott, insbesondere aus durchsichtigem Material umfasst.

14. Personenkraftwagen nach Anspruch 13,
**dadurch gekennzeichnet, dass**
das Windschott im Bereich des Kragens (12) angeordnet ist.

15. Personenkraftwagen nach einem der vorherigen Ansprüche,
**dadurch gekennzeichnet, dass**
die C-Säulenstümpfe (13) die Funktion eines Überrollbügels ausbilden.

16. Personenkraftwagen nach Anspruch 15,
**dadurch gekennzeichnet, dass**
die Funktion des Überrollbügels zusätzlich vom Kragen (12) und/oder Spoiler (17) ausgebildet wird.

## Claims

1. Passenger vehicle (1) having a top (8) which can be folded back, in particular a cabriolet or a roadster, which passenger vehicle comprises C pillars designed as fixed C pillar stumps (13) and a collar (12) arranged behind the passenger compartment (9),
**characterized in that**
the collar (12) is designed as an airflow-guiding element, **in that** said airflow-guiding element at least partially protects the occupants from the airflow (L) flowing from the upper edge of the windscreen frame (5), with the airflow-guiding element comprising a spoiler (17) which is integrated into the collar (12) and with means being provided which serve to move the spoiler (17) into its active position after the opening of the top (8).

2. Passenger vehicle according to Claim 1,
**characterized in that**
the C pillar stumps (13) are connected by means of the collar (12) arranged behind the passenger compartment (9).

3. Passenger vehicle according to Claim 1 or 2,
**characterized in that**
the collar (12) has an increasing inclination from back to front and upwards as viewed in the direction of travel and forms a continuation of the contour of the body (2).

4. Passenger vehicle according to Claim 1, 2 or 3,
**characterized in that**
the C pillar stumps (13) and/or the collar (12) project upward beyond the waist line (11).

5. Passenger vehicle according to one of Claims 1 to 4,
**characterized in that**
the C pillar stumps (13) and/or the collar (12) are formed by the body (2).

6. Passenger vehicle according to one of the preceding claims,
**characterized in that**
the C pillar stumps (13) and the collar (12) are formed as a common body element (10).

7. Passenger vehicle according to one of the preceding claims,
**characterized in that,**
when the top (8) is open, the spoiler (17) is arranged in its active position in the region between the C pillar stumps (13) behind the passenger compartment (9) in such a way as to receive the airflow (L) flowing from the upper edge of the windscreen frame (5) and at least partially conduct said airflow (L) over the occupants.

8. Passenger vehicle according to one of the preceding claims,
**characterized in that**
the spoiler (17) is matched to the contour of the collar (12).

9. Passenger vehicle according to one of the preceding claims,
**characterized in that**
the spoiler (17) is recessed into the contour of the collar (12).

10. Passenger vehicle according to one of the preceding claims,
**characterized in that**,
in its active position, the spoiler (17) is aligned substantially horizontally in the flow direction of the airflow (L) and perpendicular thereto.

11. Passenger vehicle according to one of the preceding claims,
**characterized in that**
the spoiler (17) is pivoted out of the contour of the collar (12) by the means.

12. Passenger vehicle according to Claim 11,
**characterized in that**
a pivot axle (19) is arranged on the C pillar stumps (13) in the region of the transition to the top (8).

13. Passenger vehicle according to one of the preceding claims,
**characterized in that**
it comprises an additional wind deflector composed in particular of transparent material.

14. Passenger vehicle according to Claim 13,
**characterized in that**
the wind deflector is arranged in the region of the collar (12).

15. Passenger vehicle according to one of the preceding claims,
**characterized in that**
the C pillar stumps (13) perform the function of a rollover bar.

16. Passenger vehicle according to Claim 15,
**characterized in that** the function of the rollover bar is performed additionally by the collar (12) and/or spoiler (17).

## Revendications

1. Véhicule automobile (1) comprenant une capote escamotable (8), notamment cabriolet ou roadster, qui comprend des colonnes C réalisées en tant que troncs de colonne C fixes (13) et un bord (12) disposé derrière l'habitacle de conduite (9),
**caractérisé en ce que**
le bord (12) est réalisé sous forme d'élément de guidage du courant d'air, de telle sorte qu'il protège les occupants au moins en partie du courant d'air (L) s'écoulant depuis l'arête supérieure du cadre du pare-brise (5), l'élément de guidage du courant d'air comprenant un déflecteur (17) intégré dans le bord (12) et des moyens étant prévus, à l'aide desquels le déflecteur (17) est déplacé après l'ouverture de la capote (8) dans sa position fonctionnelle.

2. Véhicule automobile selon la revendication 1,
**caractérisé en ce que**
les troncs de colonne C (13) sont connectés au-dessus du bord (12) disposé derrière l'habitacle de conduite (9).

3. Véhicule automobile selon la revendication 1 ou 2,
**caractérisé en ce que**
le bord (12), vu dans la direction de conduite, est pourvu d'une inclinaison croissante de l'arrière vers l'avant et vers le haut, et prolonge le contour de la carrosserie (2).

4. Véhicule automobile selon la revendication 1, 2 ou 3,
**caractérisé en ce que**
les troncs de colonne C (13) et/ou le bord (12) font saillie vers le haut au-delà de la ligne de ceinture (11).

5. Véhicule automobile selon l'une quelconque des revendications 1 à 4,
**caractérisé en ce que**
les troncs de colonne C (13) et/ou le bord (12) sont formés par la carrosserie (2).

6. Véhicule automobile selon l'une quelconque des revendications précédentes,
**caractérisé en ce que**
les troncs de colonne C (13) et/ou le bord (12) sont réalisés sous forme d'un élément de carrosserie commun (10).

7. Véhicule automobile selon l'une quelconque des revendications précédentes,
**caractérisé en ce que**
le déflecteur (17), lorsque la capote (8) est ouverte, est disposé dans sa position fonctionnelle dans la région entre les troncs de colonne C (13) derrière l'habitacle de conduite (9), de telle sorte qu'il reçoive le courant d'air (L) s'écoulant depuis l'arête supérieure du cadre de pare-brise (5) et qu'il le dirige au moins en partie au-dessus et au-delà des occupants.

8. Véhicule automobile selon l'une quelconque des revendications précédentes,
**caractérisé en ce que**
le déflecteur (17) est adapté au contour du bord (12).

9. Véhicule automobile selon l'une quelconque des revendications précédentes,
**caractérisé en ce que**
le déflecteur (17) est incorporé dans le contour du bord (12).

10. Véhicule automobile selon l'une quelconque des revendications précédentes,
**caractérisé en ce que**
le déflecteur (17), dans sa position fonctionnelle, est orienté dans le sens de l'écoulement du courant d'air (L) et transversalement à celui-ci essentiellement horizontalement.

11. Véhicule automobile selon l'une quelconque des revendications précédentes,
**caractérisé en ce que**
le déflecteur (17) est pivoté par les moyens hors du contour du bord (12).

12. Véhicule automobile selon la revendication 11,
**caractérisé en ce**
**qu'**un axe de pivotement (19) est disposé sur les troncs de colonne C (13) dans la région de la transition à la capote (8).

13. Véhicule automobile selon l'une quelconque des revendications précédentes,
**caractérisé en ce**
**qu'**il comprend un coupe-vent supplémentaire, notamment en matériau transparent.

14. Véhicule automobile selon la revendication 13,
**caractérisé en ce que**
le coupe-vent est disposé dans la région du bord (12).

15. Véhicule automobile selon l'une quelconque des revendications précédentes,
**caractérisé en ce que**
les troncs de colonne C (13) ont la fonction d'un arceau de sécurité.

16. Véhicule automobile selon la revendication 15,
**caractérisé en ce que**
la fonction de l'arceau de sécurité est aussi assurée par le bord (12) et/ou le déflecteur (17).
